# FASCICULE DE BREVET EUROPEEN

(11) **EP 4 126 516 B1**
(45) Date de publication et mention de la délivrance du brevet: **19.02.2025**
(21) Numéro de dépôt: 21716498.7
(22) Date de dépôt: 18.03.2021
(51) Int. Cl.: B29C 70/24, B29D 99/00, F01D 5/28

(54) **AUBE DE TURBOMACHINE EN MATÉRIAU COMPOSITE AVEC TEXTURE FIBREUSE**
TURBINENMOTORSCHAUFEL AUS VERBUNDMATERIAL MIT FASERTEXTUR
TURBINE ENGINE BLADE MADE OF COMPOSITE MATERIAL WITH FIBROUS TEXTURE

(30) Priorité: 27.03.2020 FR 2003065
(43) Date de publication de la demande: 08.02.2023
(73) Titulaire: SAFRAN AIRCRAFT ENGINES, 75015 Paris (FR)
(72) Inventeur: NOTARIANNI, Gilles, Pierre - Marie, 77550 MOISSY-CRAMAYEL (FR); FIXY, Teddy, 77550 MOISSY-CRAMAYEL (FR); SALAS DE LOS RIOS, Paula, 77550 MOISSY-CRAMAYEL (FR)
(74) Mandataire: Cabinet Beau de Loménie
(86) Numéro de dépôt international: PCT/FR2021/050451
(87) Numéro de publication internationale: WO 2021/191531

(56) Documents cités:
- EP-A1- 3 292 991
- EP-A2- 2 253 806
- EP-B1- 2 253 806
- EP-B1- 3 292 991
- FR-A1- 3 040 909

## Description

### Domaine Technique

L'invention se rapporte au domaine général des pièces en matériau composite pour l'aéronautique. Plus précisément, l'invention concerne une aube de turbomachine en matériau composite comprenant une texture fibreuse destinée à former le renfort fibreux.

### Technique antérieure

Dans le domaine des turbomachines aéronautiques, la diminution de la masse des pièces est une problématique majeure tant au niveau des coûts de fabrication de ces pièces, qu'au niveau de l'efficacité énergétique et environnementale des turbomachines. Cette problématique a entraîné rapidement le développement de pièces en matériaux composites, notamment à matrice organique (CMO) pour remplacer les traditionnelles pièces métalliques dans différentes parties du turboréacteur. Un exemple est décrit dans la demande FR 3040909.

Cependant, la réalisation d'aubes en matériau composite à matrice organique pose certains problèmes, notamment en termes de résistance aux impacts. En effet, la localisation de ces aubes, par exemple dans la soufflante ou le compresseur, peut les exposer à des impacts d'objets de natures diverses (oiseaux, graviers, blocs de glace, sable, etc.) et les aubes en CMO peuvent alors s'endommager ou s'éroder.

On connait le positionnement d'un clinquant métallique sur le bord d'attaque des aubes pour protéger celui-ci des impacts tout en conservant une masse réduite. Toutefois, le corps des aubes en matériau composite de la soufflante peut présenter des zones de faible épaisseur pour répondre à des contraintes aérodynamiques qui sont encore susceptibles de s'endommager en cas d'impact.

Il existe donc un besoin pour une aube de turbomachine de masse réduite qui résiste mieux aux impacts.

### Exposé de l'invention

A cet effet, l'invention propose une aube de turbomachine en matériau composite comprenant un renfort fibreux densifié par une matrice et formé par une texture fibreuse, la texture étant en une seule pièce et présentant un tissage tridimensionnel entre une pluralité de fils ou torons de chaîne en premières fibres s'étendant selon une direction longitudinale et une pluralité de fils ou torons de trame en premières fibres s'étendant selon une direction transversale, la texture comprenant une partie de pied d'aube et une partie de pale d'aube s'étendant entre la partie de pied d'aube et une extrémité libre de la texture fibreuse, la texture s'étendant selon la direction transversale entre un premier bord correspondant à un bord d'attaque de l'aube et un deuxième bord correspondant à un bord de fuite de l'aube. La texture fibreuse est caractérisée en ce que la partie de pale d'aube présente une zone renforcée s'étendant selon la direction longitudinale à partir de l'extrémité libre de la texture fibreuse sur une première longueur inférieure ou égale à 20%, de préférence inférieure ou égale à 10%, de la longueur de la texture fibreuse mesurée dans la direction longitudinale, et selon la direction transversale à partir du deuxième bord sur une deuxième longueur inférieure ou égale à 75% de la largeur de la texture fibreuse mesurée dans la direction transversale au niveau de l'extrémité libre de la texture, la zone renforcée comprenant des fils ou torons de trame en deuxièmes fibres différentes des premières fibres, les deuxièmes fibres présentant un allongement à la rupture supérieur à celui des premières fibres, et en ce qu'un premier taux volumique en deuxièmes fibres dans la zone renforcée est supérieur à un deuxième taux volumique en deuxièmes fibres dans le reste de la partie correspondant au renfort fibreux de la pale de l'aube.

En d'autres termes, il y a plus de deuxièmes fibres dans la zone renforcée que dans le reste de la partie de pale d'aube. En particulier, les deuxièmes fibres peuvent être présentes majoritairement dans les fils de trame de la zone renforcée.

On entend par taux volumique en deuxièmes fibres dans une partie de texture, le rapport entre le volume occupé par les lesdites fibres et le volume total occupé par toutes les fibres dans cette partie. Les fils ou torons peuvent être constitués uniquement par des fibres d'un même matériau. Par « tissage tridimensionnel » ou « tissage 3D », il faut comprendre un mode de tissage par lequel certains au moins des fils de chaine lient des fils de trame sur plusieurs couches de trame. Une inversion des rôles entre chaîne et trame est possible dans le présent texte et doit être considérée comme couverte aussi par les revendications.

Avec une telle texture fibreuse, on peut réaliser une aube capable de mieux résister aux impacts d'objets, notamment du type oiseau de petite taille ou taille moyenne pour lesquels on observe des endommagements localisés au niveau du bord de fuite en tête de pale et dans le sens transversal. L'allongement à la rupture plus important des deuxièmes fibres localisées dans la zone renforcée permet à l'aube qui comprendra une telle texture en tant que renfort de tenir ces impacts sans augmenter de façon significative sa masse (la masse des deuxièmes fibres est généralement plus grande que celle des premières fibres). L'utilisation des deuxièmes fibres pour des fils ou torons de trame rend la fabrication d'une telle texture fibreuse aisée puisqu'il suffit de remplacer les fils ou torons de trame en premières fibres par ceux en deuxièmes fibres pendant le tissage dans un métier à tisser, comme il sera détaillé plus loin.

Dans un exemple de réalisation, la partie de pale d'aube peut comprendre en outre une zone de transition adjacente selon la direction transversale à la zone renforcée et dans laquelle les fils ou torons de trame en deuxièmes fibres sont remplacés par des fils ou torons de trame en premières fibres, les fils ou torons de trame en deuxièmes fibres sortant progressivement de la texture fibreuse dans la zone de transition à des positions décalées selon la direction transversale, lesdits fils ou torons de trame en deuxièmes fibres étant progressivement remplacés par des fils ou torons de trame en premières fibres au niveau des positions de sortie décalées des fils ou torons de trame en deuxièmes fibres.

Cette disposition permet que les endommagements de l'aube qui comprend cette texture en tant que renfort soient répartis progressivement selon la direction transversale et ne soient pas concentrés sur un même plan longitudinal (plan de chaîne), ce qui permet d'améliorer encore la tenue de l'aube en cas d'impacts.

Dans un exemple de réalisation, la zone de transition peut s'étendre transversalement sur une longueur comprise entre 10 mm et 100 mm.

Dans un exemple de réalisation, le taux volumique en deuxièmes fibres dans la zone renforcée peut être décroissant en s'éloignant de l'extrémité libre de la texture fibreuse selon la direction longitudinale. Cette disposition permet une transition progressive de raideur selon la direction longitudinale qui permet d'améliorer encore la tenue à l'impact.

Dans un exemple de réalisation, la première longueur peut être inférieure ou égale à 100 mm.

Dans un exemple de réalisation, la deuxième longueur peut être inférieure ou égale à 50% de la largeur de la texture fibreuse mesurée dans la direction transversale au niveau de l'extrémité libre de la texture.

Dans un exemple de réalisation, les premières fibres peuvent être en carbone, et les deuxièmes fibres peuvent être en un matériau choisi parmi les suivants : verre, basalte, aramide ou polyester.

Dans un exemple de réalisation, le premier taux volumique peut être d'au moins 30%, de préférence compris entre 30% et 90%.

L'invention a également pour objet une aube de soufflante en matériau composite comprenant un renfort fibreux densifié par une matrice, le renfort fibreux de l'aube comprenant une texture fibreuse telle que celle décrite ci-avant.

L'invention vise aussi une turbomachine aéronautique comprenant une soufflante comportant un disque rotatif et une pluralité d'aubes telle que celle présentée ci-avant montées sur le disque rotatif.

Enfin, l'invention a pour objet un procédé de fabrication d'une aube de turbomachine en matériau composite comprenant un renfort fibreux densifié par une matrice et formé par une texture fibreuse destinée à former le renfort fibreux, la texture étant en une seule pièce et étant obtenue par tissage tridimensionnel entre une pluralité de fils ou torons de chaîne en premières fibres s'étendant selon une direction longitudinale et une pluralité de fils ou torons de trame en premières fibres s'étendant selon une direction transversale, la texture comprenant une partie de pied d'aube et une partie de pale d'aube s'étendant entre la partie de pied d'aube et une extrémité libre de la texture fibreuse, la texture s'étendant selon la direction transversale entre un premier bord correspondant à un bord d'attaque de l'aube et un deuxième bord correspondant à un bord de fuite de l'aube. Le procédé est caractérisé en ce que la partie de pale d'aube présente une zone renforcée s'étendant selon la direction longitudinale à partir de l'extrémité libre de la texture fibreuse sur une première longueur inférieure ou égale à 20%, de préférence inférieure ou égale à 10%, de la longueur de la texture fibreuse mesurée dans la direction longitudinale, et selon la direction transversale à partir du deuxième bord sur une deuxième longueur inférieure ou égale à 75% de la largeur de la texture fibreuse mesurée dans la direction transversale au niveau de l'extrémité libre de la texture, la zone renforcée comprenant des fils ou torons de trame en deuxièmes fibres différentes des premières fibres, les deuxièmes fibres présentant un allongement à la rupture supérieur à celui des premières fibres, et en ce qu'un premier taux volumique en deuxièmes fibres dans la zone renforcée est supérieur à un deuxième taux volumique en deuxièmes fibres dans le reste de la partie de pale d'aube.

Dans un exemple de réalisation, la partie de pale d'aube peut comprendre en outre une zone de transition adjacente selon la direction transversale à la zone renforcée dans laquelle les fils ou torons de trame en deuxièmes fibres sont remplacés par des fils ou torons de trame en premières fibres, le procédé comprenant la sortie progressive des fils ou torons de trame en deuxièmes fibres dans la zone de transition à des positions décalées selon la direction transversale et l'insertion de fils ou torons de trame en premières fibres en remplacement des fils ou torons de trame en deuxièmes fibres au niveau des positions de sortie décalées des fils ou torons de trame en deuxièmes fibres.

Un procédé de fabrication d'une aube de soufflante en matériau composite comprenant un renfort fibreux densifié par une matrice peut comprendre les étapes suivantes : on réalise une texture fibreuse telle que celle présentée ci-avant, on met en forme ladite texture pour obtenir une préforme d'aube, et on forme une matrice dans la porosité de la préforme pour obtenir l'aube. La texture fibreuse est obtenue par tissage tridimensionnel, et peut présenter par exemple une armure du type interlock. La matrice peut être une matrice organique et obtenue à partir d'une résine. La matrice peut être ainsi formée par moulage par injection de résine (procédé RTM ou « Resin Transfer Molding »).

### Brève description des dessins

[Fig. 1] La figure 1 est une vue schématique en coupe longitudinale d'une turbomachine aéronautique.
[Fig. 2] La figure 2 montre une aube de soufflante de turbomachine aéronautique selon un mode de réalisation de l'invention.
[Fig. 3] La figure 3 montre une texture fibreuse selon un mode de réalisation de l'invention.
[Fig. 4] La figure 4 montre une vue schématique agrandie de la texture fibreuse de la figure 3 au niveau de l'extrémité libre de celle-ci, où l'on voit le trajet de certains fils de trame.
[Fig. 5] La figure 5 montre une vue en coupe longitudinale dans la zone renforcée de la texture fibreuse au niveau de l'extrémité libre de celle-ci.

### Description des modes de réalisation

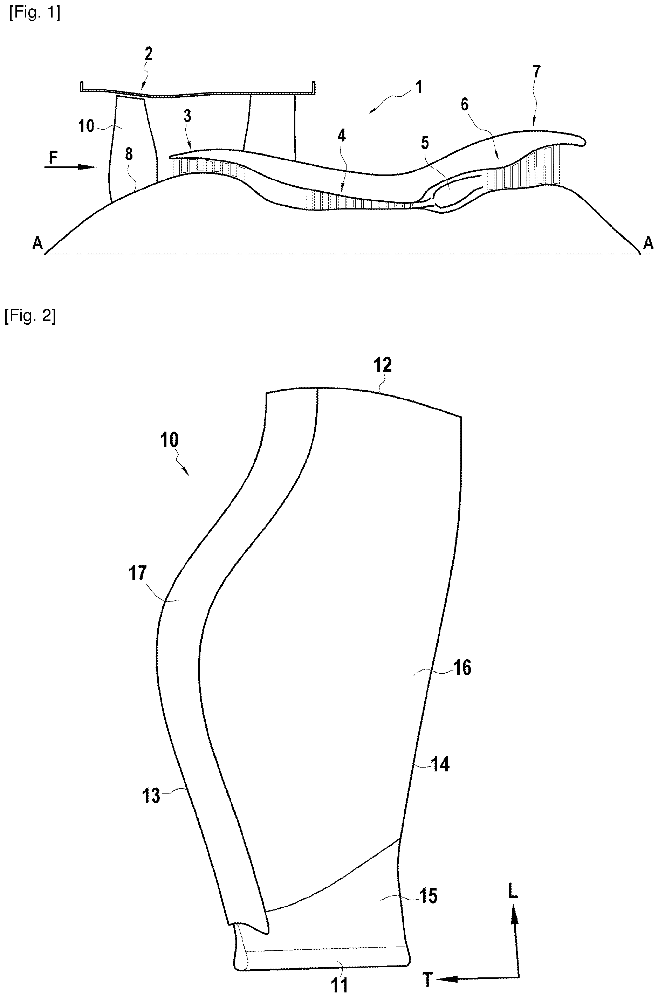

La figure 1 montre une vue schématique en coupe longitudinale d'une turbomachine aéronautique 1, ici un turboréacteur à double flux centré sur l'axe A-A. Elle comporte, d'amont en aval dans le sens F d'écoulement du flux gazeux dans la turbomachine : une soufflante 2, un compresseur basse pression 3, un compresseur haute pression 4, une chambre de combustion 5, une turbine haute pression 6, et une turbine basse pression 7.

La soufflante 2 comprend notamment un disque rotatif 8 sur lequel sont montées une pluralité d'aubes de soufflante 10, dont une est représentée sur la figure 2.

L'aube de soufflante 10 s'étend selon une direction longitudinale L entre un pied 11 et une extrémité libre 12, et selon une direction transversale T entre un bord d'attaque 13 et un bord de fuite 14. Entre le pied 11 et l'extrémité 12, l'aube comporte une échasse 15 et un corps de pale 16 situé entre l'échasse 15 et l'extrémité 12. L'aube de soufflante 10 est en matériau composite comprenant un renfort fibreux densifié par une matrice.

Dans l'exemple illustré, l'aube 10 présente un bord d'attaque métallique 17, sous la forme par exemple d'un clinquant métallique. Un tel bord d'attaque métallique 17 peut être fixé après avoir obtenu l'aube 10, ou être intégré à l'aube 10 au cours de son procédé de fabrication, de façon connue.

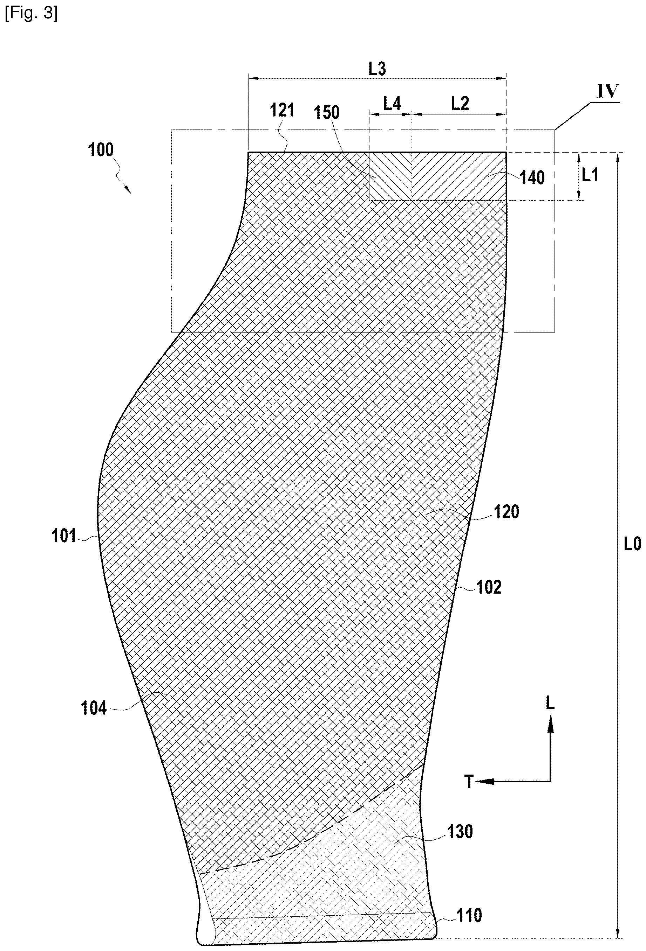

La figure 3 montre une vue schématique d'une texture fibreuse 100 destinée à former le renfort fibreux d'une aube de turbomachine telle que celle de la figure 2. Cette texture fibreuse 100 peut être obtenue par exemple par tissage tridimensionnel dans un métier à tisser de type Jacquard d'une ébauche fibreuse et découpe des fils excédentaires de l'ébauche fibreuse tissée.

La texture fibreuse 100 peut présenter un tissage tridimensionnel, et comprendre par exemple majoritairement une armure interlock ou multicouches. Par « armure interlock », il faut comprendre une armure de tissage tridimensionnel dont chaque couche de fils de chaîne lie plusieurs couches de fils de trame avec tous les fils de la même colonne de chaîne ayant le même mouvement dans le plan de l'armure. Le document WO2006/136755 décrit la réalisation de telles armures de tissage. Comme il sera décrit ultérieurement, cette texture fibreuse pourra être mise en forme puis densifiée pour obtenir une aube de soufflante 10 telle que celle illustrée de la figure 2.

La texture fibreuse 100 s'étend selon la direction longitudinale L entre une partie de pied d'aube 110 et une partie de pale d'aube 120. La texture 100 présente une extrémité libre 121 située à l'extrémité de la partie de pale d'aube 120 opposée à la partie de pied d'aube 110. Une partie d'échasse d'aube 130 est présente entre la partie de pied d'aube 110 et la partie de pale d'aube 120. De façon générale, la partie de pied d'aube 110 est plus épaisse que la partie d'échasse 130 d'aube, et l'épaisseur de la partie de pale d'aube 120 est variable. La texture fibreuse 100 s'étend selon la direction transversale T entre un premier bord 101 destiné à former le bord d'attaque 13 de l'aube 10 et un deuxième bord 102 destiné à former le bord de fuite 14 de l'aube 10.

Dans l'exemple illustré, la direction longitudinale L correspond également à la direction générale selon laquelle s'étendent les fils de chaîne dans la texture fibreuse 100, alors que la direction transversale T correspond à la direction générale selon laquelle s'étendent les fils de trame. On notera que, dans tout le texte, chaîne et trame peuvent être intervertis.

La texture fibreuse 100 présente un tissage tridimensionnel ou multicouches entre une pluralité de fils de chaîne en premières fibres et une pluralité de fils de trame en premières fibres. Conformément à l'invention, la texture fibreuse 100 présente également des fils de trame en deuxièmes fibres, différentes des premières fibres, et qui présentent un allongement à la rupture supérieur à celui des premières fibres. Plus précisément, la texture fibreuse 100 présente une zone renforcée 140 qui comprend des fils de trame en deuxièmes fibres. La zone renforcée 140 s'étend à partir de l'extrémité libre 121 de la texture fibreuse selon la direction longitudinale L sur une première longueur L1 inférieure ou égale à 20%, de préférence inférieure ou égale à 10%, de la longueur L0 de la texture fibreuse 100 mesurée dans la direction longitudinale L, et selon la direction transversale T à partir du deuxième bord 102 sur une deuxième longueur L2 inférieure ou égale à 75% de la largeur L3 de la texture fibreuse mesurée dans la direction transversale T au niveau de l'extrémité libre 121 de la texture fibreuse 100. Par exemple, la longueur L1 peut être inférieure ou égale à 100 mm. Par exemple, la longueur L2 peut être inférieure ou égale à 50% de la largeur L3.

Un premier taux volumique en deuxièmes fibres dans la zone renforcée 140 est supérieur à un deuxième taux volumique en deuxièmes fibres dans le reste de la partie de pale d'aube 120. En d'autres termes, les deuxièmes fibres sont majoritairement présentes dans la zone renforcée 140 de la partie de pale d'aube 120. Les deuxièmes fibres sont majoritairement localisées dans les fils de trame de ladite zone 140. Le premier taux volumique peut être d'au moins 30%, de préférence compris entre 30% et 90%.

Le matériau des premières fibres peut être le carbone. Le matériau des deuxièmes fibres peut être choisi parmi les suivants : verre, basalte, aramide, polyester, ou une combinaison de ces matériaux. Le tableau suivant donne des allongements à la rupture communs de plusieurs fibres pouvant être utilisées.

**[Table 1]**

| matériau des fibres - référence | allongement à la rupture (%) |
|---|---|
| verre - AGY « S-2 Glass^{®} » | 5,2 |
| verre - « E-Glass » | 4,4 |
| polyester | 3,5 |
| basalte | 3 |
| aramide - Dupont « Kevlar^{®} 49 » | 2,4 |
| carbone - Toray « HS T700 » | 2,1 |
| carbone - Toray « HS TR30S » | 1,9 |
| carbone - Toray « HS T300 » | 1,5 |

Par exemple, on peut choisir du carbone pour les premières fibres et du verre pour les deuxièmes fibres. On peut aussi utiliser plusieurs types de fils ou torons de trame qui comprennent des fibres différentes ayant un allongement à la rupture supérieur à celui des premières fibres. On notera que le matériau des premières et deuxièmes fibres peut être identique. Par exemple, les premières et deuxièmes fibres peuvent être en carbone, à condition que leurs allongements à la rupture soient différents. Par exemple, on peut choisir des premières fibres de carbone en HexTow^{®} IM7 (commercialisé par la société Hexcel), et des deuxièmes fibres de carbone en Torayca^{®} T1100 (commercialisé par la société Toray).

L'allongement à la rupture des premières fibres peut être par exemple inférieur ou égal à 2,1 %, et celui des deuxièmes fibres supérieur ou égal à 2,4%.

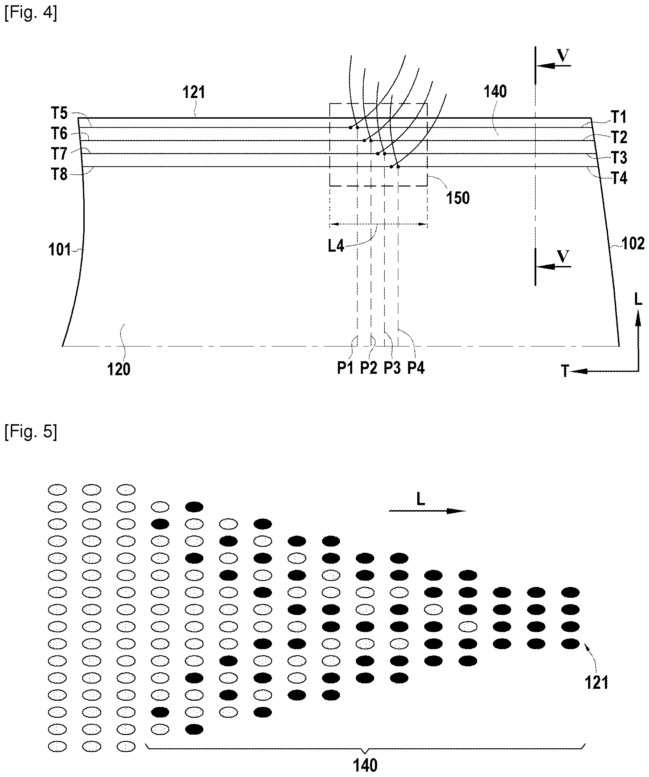

La texture fibreuse 100 comprend en outre une zone de transition 150 qui est adjacente à la zone renforcée 140 selon la direction transversale T, dans laquelle les fils de trame en deuxièmes fibres sont remplacés par des fils de trame en premières fibres. Cette zone de transition 150 va être décrite plus en détails à l'aide de la figure 4.

Sur la figure 4, on a représenté schématiquement le trajet de quatre fils de trame T1, T2, T3 et T4 en deuxièmes fibres qui sont tissés dans la zone renforcée 140. Les fils de trame T1 à T4 sont ici insérés dans la texture fibreuse 100 par le deuxième bord 102 puis tissés avec des fils de chaîne (non représentés) dans la zone renforcée 140, et enfin sortis de la texture fibreuse 100 dans la zone de transition 150. Dans cet exemple, les fils de trame T1 à T4 en deuxièmes fibres sont sortis progressivement de la texture fibreuse 100 à des positions décalées selon la direction transversale T. En d'autres termes, les fils de trame T1 à T4 sont sortis de la texture fibreuse 100 au niveau de plans transversaux ou plans de chaîne P1, P2, P3 et P4 différents. Plus précisément, dans cet exemple, le fil de trame T1 le plus proche de l'extrémité libre 121 de la texture fibreuse 100 est sorti au niveau d'un plan de chaîne P1 situé plus proche du premier bord 101 que le plan de chaîne P2 au niveau duquel est sorti le fil de trame T2 qui est plus éloigné de l'extrémité libre 121 que le fil de trame T1. Il en va de même pour les fils T3 et T4 qui sont sortis au niveau des plans de chaîne P3 et P4 décalés dans la direction transversale T.

Les fils de trame T1 à T4 sont ensuite remplacés par des fils de trame T5, T6, T7 et T8 en premières fibres dans la zone de transition 150, au niveau ou à proximité immédiate des positions de sortie décalées des fils T1, T2, T3 et T4 respectivement. Les fils de trame T5, T6, T7 et T8 sont ainsi insérés dans la texture fibreuse 100 dans la zone de transition 150 puis tissés normalement sur la portion restante de la texture fibreuse 100. Cette disposition permet de répartir les positions où un changement de raideur intervient entre les premières fibres et les deuxièmes fibres sur plusieurs plans de chaîne afin d'augmenter encore la tenue en cas d'impact. Par exemple, la zone de transition 150 s'étend sur une longueur L4 comprise entre 10 mm et 100 mm.

La figure 5 montre une vue en coupe longitudinale de la texture fibreuse 100 dans la zone renforcée 140 illustrant la caractéristique selon laquelle le taux volumique en deuxièmes fibres dans la zone renforcée 140 est décroissant en s'éloignant de l'extrémité libre 121 de la texture fibreuse selon la direction longitudinale L. La figure 5 montre seulement les fils de trame en coupe. On a représenté en clair les fils de trame en premières fibres et en noir les fils de trame en deuxièmes fibres. On peut voir que la proportion de fils de trame en deuxièmes fibres dans chaque colonne de fils de trame décroit en s'éloignant de l'extrémité libre 121. Cette disposition permet d'assurer une transition de raideur progressive entre la zone renforcée 140 et le reste de la partie de pale 120 de la texture fibreuse 100 dans la direction longitudinale L, afin d'augmenter encore la tenue en cas d'impact. L'exemple montré sur la figure 5 montre une coupe longitudinale d'une zone renforcée présentant une dégressivité d'épaisseur correspondant à une réduction du nombre de fils dans la direction longitudinale. Selon une variante de réalisation, le nombre de fils présents dans la zone renforcée est constant dans la direction longitudinale.

Pour obtenir une aube de soufflante 10 telle que celle illustrée sur la figure 2, on réalise une texture fibreuse 100 par tissage tridimensionnel, on met en forme ladite texture pour obtenir une préforme d'aube ayant la géométrie adaptée, et on forme une matrice dans la porosité de la préforme pour obtenir l'aube. On peut au moment du tissage remplacer des fils de trame en premières fibres par des fils de trame en deuxièmes fibres dans la zone renforcée 140 de la texture fibreuse comme décrit ci-avant.

L'aube de soufflante 10 peut être réalisée par un procédé de moulage par transfert de résine (RTM ou « Resin Transfer Molding ») où la préforme est placée dans un moule ayant la forme de l'aube et dans lequel une résine est injectée puis polymérisée. Dans ce cas, la matrice peut être une matrice organique et obtenue à partir d'une résine de type époxy.

## Revendications

1. Aube (10) de turbomachine (1) en matériau composite comprenant un renfort fibreux densifié par une matrice et formé par une texture fibreuse (100), la texture étant en une seule pièce et présentant un tissage tridimensionnel entre une pluralité de fils ou torons de chaîne en premières fibres s'étendant selon une direction longitudinale (L) et une pluralité de fils ou torons de trame en premières fibres s'étendant selon une direction transversale (T), la texture comprenant une partie correspondant à un renfort fibreux d'un pied (110) de l'aube (10) et une partie correspondant à un renfort fibreux d'une pale (120) de l'aube (10) s'étendant entre la partie correspondant au renfort fibreux du pied de l'aube et une extrémité libre (121) de la texture fibreuse, la texture s'étendant selon la direction transversale (T) entre un premier bord (101) correspondant à un bord d'attaque (13) de l'aube et un deuxième bord (102) correspondant à un bord de fuite (14) de l'aube, **caractérisée en ce que** la partie correspondant au renfort fibreux de la pale (120) de l'aube présente une zone renforcée (140) s'étendant selon la direction longitudinale (L) à partir de l'extrémité libre (121) de la texture fibreuse sur une première longueur (L1) inférieure ou égale à 20% de la longueur (L0) de la texture fibreuse mesurée dans la direction longitudinale, et selon la direction transversale (T) à partir du deuxième bord (102) sur une deuxième longueur (L2) inférieure ou égale à 75% de la largeur (L3) de la texture fibreuse mesurée dans la direction transversale au niveau de l'extrémité libre (121) de la texture, la zone renforcée comprenant des fils ou torons de trame en deuxièmes fibres (T1-T4) différentes des premières fibres, les deuxièmes fibres présentant un allongement à la rupture supérieur à celui des premières fibres, et **en ce qu'**un premier taux volumique en deuxièmes fibres dans la zone renforcée (140) est supérieur à un deuxième taux volumique en deuxièmes fibres dans le reste de la partie correspondant au renfort fibreux de la pale (120) de l'aube .

2. Aube selon la revendication 1, dans laquelle la partie correspondant au renfort fibreux de la pale (120) de l'aube (10) comprend en outre une zone de transition (150) adjacente selon la direction transversale (T) à la zone renforcée (140) et dans laquelle les fils ou torons de trame en deuxièmes fibres (T1-T4) sont remplacés par des fils ou torons de trame en premières fibres (T5-T8), les fils ou torons de trame en deuxièmes fibres (T1-T4) sortant progressivement de la texture fibreuse dans la zone de transition à des positions décalées selon la direction transversale (T), lesdits fils ou torons de trame en deuxièmes fibres étant progressivement remplacés par des fils ou torons de trame en premières fibres (T5-T8) au niveau des positions de sortie décalées des fils ou torons de trame en deuxièmes fibres.

3. Aube selon la revendication 2, dans laquelle la zone de transition (150) s'étend transversalement sur une longueur (L4) comprise entre 10 mm et 100 mm.

4. Aube selon l'une quelconque des revendications 1 à 3, dans laquelle le taux volumique en deuxièmes fibres dans la zone renforcée (140) est décroissant en s'éloignant de l'extrémité libre (121) de la texture fibreuse selon la direction longitudinale (L).

5. Aube selon l'une quelconque des revendications 1 à 4, dans laquelle la première longueur (L1) est inférieure ou égale à 100 mm.

6. Aube selon l'une quelconque des revendications 1 à 5, dans laquelle la deuxième longueur (L2) est inférieure ou égale à 50% de la largeur (L3) de la texture fibreuse mesurée dans la direction transversale (T) au niveau de l'extrémité libre (121) de la texture.

7. Aube selon l'une quelconque des revendications 1 à 6, dans laquelle les premières fibres sont en carbone, et les deuxièmes fibres sont en un matériau choisi parmi les suivants : verre, basalte, aramide ou polyester.

8. Aube selon l'une quelconque des revendications 1 à 7, dans laquelle le premier taux volumique est d'au moins 30%.

9. Aube selon l'une quelconque des revendications 1 à 8, dans laquelle l'aube est une aube de soufflante.

10. Turbomachine aéronautique (1) comprenant une soufflante (2) comportant un disque rotatif (8) et une pluralité d'aubes (10) selon la revendication 9 montées sur le disque rotatif.

11. Procédé de fabrication d'une aube (1) de turbomachine (1) en matériau composite comprenant un renfort fibreux densifié par une matrice et formé par une texture fibreuse (100), la texture étant en une seule pièce et étant obtenue par tissage tridimensionnel entre une pluralité de fils ou torons de chaîne en premières fibres s'étendant selon une direction longitudinale (L) et une pluralité de fils ou torons de trame en premières fibres s'étendant selon une direction transversale (T), la texture comprenant une partie de pied d'aube (110) et une partie de pale d'aube (120) s'étendant entre la partie et une extrémité libre (121) de la texture fibreuse, la texture s'étendant selon la direction transversale (T) entre un premier bord (101) correspondant à un bord d'attaque (13) de l'aube et un deuxième bord (102) correspondant à un bord de fuite (14) de l'aube, **caractérisé en ce que** la partie de pale d'aube (120) présente une zone renforcée (140) s'étendant selon la direction longitudinale (L) à partir de l'extrémité libre (121) de la texture fibreuse sur une première longueur (L1) inférieure ou égale à 20% de la longueur (L0) de la texture fibreuse mesurée dans la direction longitudinale, et selon la direction transversale (T) à partir du deuxième bord (102) sur une deuxième longueur (L2) inférieure ou égale à 75% de la largeur (L3) de la texture fibreuse mesurée dans la direction transversale au niveau de l'extrémité libre de la texture, la zone renforcée comprenant des fils ou torons de trame en deuxièmes fibres (T1-T4) différentes des premières fibres, les deuxièmes fibres présentant un allongement à la rupture supérieur à celui des premières fibres, et **en ce qu'**un premier taux volumique en deuxièmes fibres dans la zone renforcée (140) est supérieur à un deuxième taux volumique en deuxièmes fibres dans le reste de la partie de pale d'aube (120) de la texture fibreuse.

12. Procédé selon la revendication 11, dans lequel la partie de pale d'aube (120) comprend en outre une zone de transition (150) adjacente selon la direction transversale (T) à la zone renforcée (140) dans laquelle les fils ou torons de trame en deuxièmes fibres (T1-T4) sont remplacés par des fils ou torons de trame en premières fibres (T5-T8), le procédé comprenant la sortie progressive des fils ou torons de trame en deuxièmes fibres (T1-T4) dans la zone de transition (150) à des positions décalées selon la direction transversale (T) et l'insertion de fils ou torons de trame en premières fibres (T5-T8) en remplacement des fils ou torons de trame en deuxièmes fibres au niveau des positions de sortie décalées des fils ou torons de trame en deuxièmes fibres.

## Patentansprüche

1. Schaufel (10) einer Turbomaschine (1) aus Verbundmaterial, umfassend eine Faserverstärkung, die durch eine Matrix verdichtet und durch eine Fasertextur (100) gebildet ist, wobei die Textur einstückig ist und ein dreidimensionales Gewebe zwischen mehreren Kettfäden oder -litzen aus ersten Fasern, die sich entlang einer Längsrichtung (L) erstrecken, und mehreren Schussfäden oder -litzen aus ersten Fasern, die sich entlang einer Querrichtung (T) erstrecken, aufweist, wobei die Textur einen Teil, der einer Faserverstärkung eines Fußes (110) der Haube (10) entspricht, und einen Teil, der einer Faserverstärkung eines Blattes (120) der Schaufel (10) entspricht, der sich zwischen dem Teil, welcher der Faserverstärkung des Fußes der Schaufel entspricht, und einem freien Ende (121) der Fasertextur erstreckt, umfasst, wobei sich die Textur entlang der Querrichtung (T) zwischen einer ersten Kante (101), die einer Vorderkante (13) der Schaufel entspricht, und einer zweiten Kante (102), die einer Hinterkante (14) der Schaufel entspricht, erstreckt, **dadurch gekennzeichnet, dass** der Teil, welcher der Faserverstärkung des Blattes (120) der Schaufel entspricht, einen verstärkten Bereich (140) aufweist, der sich entlang der Längsrichtung (L) von dem freien Ende (121) der Fasertextur auf einer ersten Länge (L1) kleiner oder gleich 20 % der Länge (L0) der Fasertextur gemessen in der Längsrichtung und entlang der Querrichtung (T) von der zweiten Kante (102) auf einer zweiten Länge (L2) kleiner oder gleich 75 % der Breite (L3) der Fasertextur gemessen in der Querrichtung auf Höhe des freien Endes (121) der Textur erstreckt, wobei der verstärkte Bereich Schussfäden oder -litzen aus zweiten Fasern (T1-T4) umfasst, die sich von den ersten Fasern unterscheiden, wobei die zweiten Fasern eine Bruchdehnung größer als diejenige der ersten Fasern aufweisen, und dass ein erster Volumenanteil aus zweiten Fasern in dem verstärkten Bereich (140) größer als ein zweiter Volumenanteil aus zweiten Fasern in dem Rest des Teils ist, welcher der Faserverstärkung des Blattes (120) der Schaufel entspricht.

2. Schaufel nach Anspruch 1, wobei der Teil, welcher der Faserverstärkung des Blattes (120) der Schaufel (10) entspricht, ferner einen benachbarten Übergangsbereich (150) entlang der Querrichtung (T) in dem verstärkten Bereich (140) umfasst und in dem die Schussfäden oder -litzen aus zweiten Fasern (T1-T4) durch Schussfäden oder -litzen aus ersten Fasern (T5-T8) ersetzt sind, wobei die Schussfäden oder -litzen aus zweiten Fasern (T1-T4) progressiv von der Fasertextur in dem Übergangsbereich zu versetzten Positionen entlang der Querrichtung (T) austreten, wobei die Schussfäden oder -litzen aus zweiten Fasern progressiv durch Schussfäden oder -litzen aus ersten Fasern (T5-T8) auf Höhe der versetzten Austrittspositionen der Schussfäden oder -litzen aus zweiten Fasern ersetzt sind.

3. Schaufel nach Anspruch 2, wobei sich der Übergangsbereich (150) quer auf einer Länge (L4) erstreckt, die zwischen 10 mm und 100 mm umfasst.

4. Schaufel nach einem der Ansprüche 1 bis 3, wobei der Volumenanteil aus zweiten Fasern in dem verstärkten Bereich (140) mit Erstreckung von dem freien Ende (121) der Fasertextur entlang der Längsrichtung (L) abnehmend ist.

5. Schaufel nach einem der Ansprüche 1 bis 4, wobei die erste Länge (L1) kleiner oder gleich 100 mm ist.

6. Schaufel nach einem der Ansprüche 1 bis 5, wobei die zweite Länge (L2) kleiner oder gleich 50 % der Breite (L3) der Fasertextur gemessen in der Querrichtung (T) auf Höhe des freien Endes (121) der Textur ist.

7. Schaufel nach einem der Ansprüche 1 bis 6, wobei die ersten Fasern aus Kohlenstoff sind und die zweiten Fasern aus einem Material ausgewählt aus den folgenden sind: Glas, Basalt, Aramid oder Polyester.

8. Schaufel nach einem der Ansprüche 1 bis 7, wobei der erste Volumenanteil mindestens 30 % beträgt.

9. Schaufel nach einem der Ansprüche 1 bis 8, wobei die Schaufel eine Verdichterschaufel ist.

10. Luftfahrtturbomaschine (1), umfassend einen Verdichter (2), der eine Drehscheibe (8) und mehrere Schaufeln (10) nach Anspruch 9, die auf der Drehscheibe montiert sind, beinhaltet.

11. Verfahren zur Herstellung einer Schaufel (10) einer Turbomaschine (1) aus Verbundmaterial, umfassend eine Faserverstärkung, die durch eine Matrix verdichtet und durch eine Fasertextur (100) gebildet ist, wobei die Textur einstückig ist und durch dreidimensionales Gewebe zwischen mehreren Kettfäden oder -litzen aus ersten Fasern, die sich entlang einer Längsrichtung (L) erstrecken, und mehreren Schussfäden oder -litzen aus ersten Fasern, die sich entlang einer Querrichtung (T) erstrecken, erhalten wird, wobei die Textur einen Schaufelfußteil (110) und einen Schaufelblattteil (120), der sich zwischen dem Teil und einem freien Ende (121) der Fasertextur erstreckt, umfasst, wobei sich die Textur entlang der Querrichtung (T) zwischen einer ersten Kante (101), die einer Vorderkante (13) der Schaufel entspricht, und einer zweiten Kante (102), die einer Hinterkante (14) der Schaufel entspricht, erstreckt, **dadurch gekennzeichnet, dass** der Schaufelblattteil (120) einen verstärkten Bereich (140) aufweist, der sich entlang der Längsrichtung (L) von dem freien Ende (121) der Fasertextur auf einer ersten Länge (L1) kleiner oder gleich 20 % der Länge (L0) der Fasertextur gemessen in der Längsrichtung und entlang der Querrichtung (T) von der zweiten Kante (102) auf einer zweiten Länge (L2) kleiner oder gleich 75 % der Breite (L3) der Fasertextur gemessen in der Querrichtung auf Höhe des freien Endes der Textur erstreckt, wobei der verstärkte Bereich Schussfäden oder -litzen aus zweiten Fasern (T1-T4) umfasst, die sich von den ersten Fasern unterscheiden, wobei die zweiten Fasern eine Bruchdehnung größer als diejenige der ersten Fasern aufweisen, und dass ein erster Volumenanteil aus zweiten Fasern in dem verstärkten Bereich (140) größer als ein zweiter Volumenanteil aus zweiten Fasern in dem Rest des Schaufelblattteils (120) der Fasertextur ist.

12. Verfahren nach Anspruch 11, wobei der Schaufelblattteil (120) ferner einen benachbarten Übergangsbereich (150) entlang der Querrichtung (T) in dem verstärkten Bereich (140) umfasst, in dem die Schussfäden oder -litzen aus zweiten Fasern (T1-T4) durch Schussfäden oder -litzen aus ersten Fasern (T5-T8) ersetzt sind, wobei das Verfahren den progressiven Austritt der Schussfäden oder -litzen aus zweiten Fasern (T1-T4) in dem Übergangsbereich (150) zu versetzten Positionen entlang der Querrichtung (T) und das Einsetzen von Schussfäden oder -litzen aus ersten Fasern (T5-T8) als Ersatz von Schussfäden oder -litzen aus zweiten Fasern auf Höhe der versetzten Austrittspositionen der Schussfäden oder -litzen aus zweiten Fasern umfasst.

## Claims

1. A turbomachine (1) blade (10) made of composite material comprising a fibrous reinforcement densified by a matrix and formed by a fibrous texture (100), the texture being in one piece and having a three-dimensional weaving between a plurality of warp yarns or strands made of first fibers extending along a longitudinal direction (L) and a plurality of weft yarns or strands made of first fibers extending along a transverse direction (T), the texture comprising a portion corresponding to a fibrous reinforcement of a root (110) of the blade (10) and a portion corresponding to a fibrous reinforcement of a airfoil (120) of the blade (10) extending between the portion corresponding to the fibrous reinforcement of the root of the blade and a free end (121) of the fibrous texture, the texture extending along the transverse direction (T) between a first edge (101) corresponding to a leading edge (13) of the blade and a second edge (102) corresponding to a trailing edge (14) of the blade,
**characterized in that** the portion corresponding to the fibrous reinforcement of the airfoil (120) of the blade has a reinforced area (140) extending along the longitudinal direction (L) from the free end (121) of the fibrous texture over a first length (L1) less than or equal to 20% of the length (L0) of the fibrous texture measured in the longitudinal direction, and along the transverse direction (T) from the second edge (102) over a second length (L2) less than or equal to 75% of the width (L3) of the fibrous texture measured in the transverse direction at the level of the free end (121) of the texture, the reinforced area comprising weft yarns or strands made of second fibers (T1-T4) different from the first fibers, the second fibers having an elongation at break greater than that of the first fibers, and **in that** a first volume rate of second fibers in the reinforced area (140) is greater than a second volume rate of second fibers in the rest of the portion corresponding to the fibrous reinforcement of the airfoil (120) of the blade.

2. The blade according to claim 1, wherein the portion corresponding to the fibrous reinforcement of the airfoil (120) of the blade (10) further comprises a transition area (150) adjacent along the transverse direction (T) to the reinforced area (140) and wherein the weft yarns or strands made of second fibers (T1-T4) are replaced by weft yarns or strands made of first fibers (T5-T8), the weft yarns or strands made of second fibers (T1-T4) gradually exiting from the fibrous texture in the transition area at offset positions along the transverse direction (T), said weft yarns or strands made of second fibers being gradually replaced by weft yarns or strands made of first fibers (T5-T8) at the level of the offset exit positions of the weft yarns or strands made of second fibers.

3. The blade according to claim 2, wherein the transition area (150) extends transversely over a length (L4) comprised between 10 mm and 100 mm.

4. The blade according to any one of claims 1 to 3, wherein the volume rate of second fibers in the reinforced area (140) decreases as moving away from the free end (121) of the fibrous texture along the longitudinal direction (L).

5. The blade according to any one of claims 1 to 4, wherein the first length (L1) is less than or equal to 100 mm.

6. The blade according to any one of claims 1 to 5, wherein the second length (L2) is less than or equal to 50% of the width (L3) of the fibrous texture measured along the transverse direction (T) at the level of the free end (121) of the texture.

7. The blade according to any one of claims 1 to 6, wherein the first fibers are made of carbon, and the second fibers are made of a material chosen among the following: glass, basalt, aramid or polyester.

8. The blade according to any one of claims 1 to 7, wherein the first volume rate is of at least 30%.

9. The blade according to any one of claims 1 to 8, wherein the blade is a fan blade.

10. An aeronautical turbomachine (1) comprising a fan (2) including a rotary disk (8) and a plurality of blades (10) according to claim 9 mounted on the rotary disk.

11. A method for manufacturing a turbomachine (1) blade (10) made of composite material comprising a fibrous reinforcement densified by a matrix and formed by a fibrous texture (100), the texture being in one piece and being obtained by three-dimensional weaving between a plurality of warp yarns or strands made of first fibers extending along a longitudinal direction (L) and a plurality of weft yarns or strands made of first fibers extending along a transverse direction (T), the texture comprising a blade root portion (110) and a blade airfoil portion (120) extending between the blade root portion and a free end (121) of the fibrous texture, the texture extending along the transverse direction (T) between a first edge (101) corresponding to a leading edge (13) of the blade and a second edge (102) corresponding to a trailing edge (14) of the blade, **characterized in that** the blade airfoil portion (120) has a reinforced area (140) extending along the longitudinal direction (L) from the free end (121) of the fibrous texture over a first length (L1) less than or equal to 20% of the length (L0) of the fibrous texture measured in the longitudinal direction, and along the transverse direction (T) from the second edge (102) over a second length (L2) less than or equal at 75% of the width (L3) of the fibrous texture measured in the transverse direction at the level of the free end of the texture, the reinforced area comprising weft yarns or strands made of second fibers (T1-T4) different from the first fibers, the second fibers having an elongation at break greater than that of the first fibers, and **in that** a first volume rate of second fibers in the reinforced area (140) is greater than a second volume rate of second fibers in the rest of the blade airfoil portion (120) of the fibrous texture.

12. The method according to claim 11, wherein the blade airfoil portion (120) further comprises a transition area (150) adjacent along the transverse direction (T) to the reinforced area (140) in which the weft yarns or strands made of second fibers (T1-T4) are replaced by weft yarns or strands made of first fibers (T5-T8), the method comprising the gradual exit of the weft yarns or strands made of second fibers (T1-T4) in the transition area (150) at offset positions along the transverse direction (T) and the insertion of weft yarns or strands made of first fibers (T5-T8) as a replacement for the weft yarns or strands made of second fibers at the level of the offset exit positions of the weft yarns or strands made of second fibers. I
